(19) Europäisches Patentamt

European Patent Office

Office européen des brevets

(11) **EP 1 111 820 A1**

## (12) DEMANDE DE BREVET EUROPEEN

(43) Date de publication:
**27.06.2001 Bulletin 2001/26**

(51) Int Cl.⁷: **H04B 10/18**, H04J 14/02,
G02B 6/28

(21) Numéro de dépôt: **00403624.0**

(22) Date de dépôt: **21.12.2000**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **23.12.1999 FR 9916332**

(71) Demandeur: **ALCATEL
75008 Paris (FR)**

(72) Inventeurs:
• **Leclerc, OLivier
91240 Saint Michel s/ Orge (FR)**

• **Brindel, Patrick
91310 Longpont s/ Orge (FR)**
• **Desurvire, Emmanuel
91680 Bruyères Le Chatel (FR)**
• **Penninckx, Denis
91620 Nozay (FR)**

(74) Mandataire: **Fournier, Michel et al
Companie Financière Alcatel,
DPI,
30, Avenue Kléber
75116 Paris (FR)**

### (54) Dispositif d'application d'un retard en ligne

(57) Pour retarder des signaux optiques de manière précise et continue dans une plage dynamique très courte, le dispositif comprend :

- un premier modulateur de phase (10) appliquant une première modulation de phase à l'onde porteuse d'un signal d'entrée (S1) pour fournir un premier signal intermédiaire (S2) porté par une longueur d'onde modifiée,
- un élément dispersif (12) recevant le premier signal intermédiaire (S2) et fournissant un second signal

intermédiaire (S3), et
- un second modulateur de phase (14) appliquant une modulation de phase à l'onde porteuse du second signal intermédiaire (S3) pour fournir un signal de sortie (S4) porté par la longueur d'onde du signal d'entrée (S1).

Application dans les systèmes de télécommunication optiques, notamment à la conversion de signaux multiplexés en longueur d'onde en signaux multiplexés temporellement, et à la régénération de signaux multiplexés en longueur d'onde.

F I G. 1

**Description**

La présente invention concerne un dispositif pour appliquer un retard à des signaux optiques, en particulier à des signaux véhiculés dans un système de transmission de données par voie optique.

Pour certaines applications dans des systèmes de télécommunication optiques, il est important de pouvoir retarder des signaux optiques de manière précise et continue dans une plage dynamique très courte. Par exemple, pour des signaux binaires dont on veut pouvoir ajuster un retard sur une durée de l'ordre du temps bit, avec un débit de 40Gbit/s, cela revient à une plage d'une durée de 25ps environ.

De telles caractéristiques de retard sont par exemple utiles pour réaliser une conversion de signaux WDM (pour "wavelength division multiplexing", c'est-à-dire multiplexage en longueur d'onde) en signaux TDM (pour "time division multiplexing", c'est-à-dire multiplexage temporel).

Une autre application est la régénération de signaux WDM selon laquelle les canaux spectraux sont resynchronisés entre eux avant de subir une modulation synchrone de remise en forme au moyen d'un modulateur commun.

Pour appliquer des retards, on connaît par exemple des articles N.V. JESPERSEN, A.C. HEATH and E.S. ROLLER, SPIE, vol 756, p 156 (1987) et P.R. HERCZFELD et al., "Wide-band true time delay phase shifter devices", Proc.IEEE MTT-5 International Microwave Symposium Digest, Las Vegas, Na., June 1987, PP 603-606, des lignes à retard permettant d'obtenir un changement du retard par élongation de fibre retardatrice.

En effet, l'enroulement d'une fibre optique sur un mandrin piézoélectrique donne un moyen de commander la longueur d'une fibre par une commande électrique. Des variations relatives de longueur de l'ordre de $10^{-3}$ pourraient être obtenues par cette méthode, ce qui permettrait d'atteindre un retard de 100 ps avec quelques dizaines de mètres de fibre. Une telle ligne à retard permet donc d'obtenir continûment des retards.

Toutefois, divers inconvénients de cette solution sont à noter : les hautes tensions de commande nécessaires (de l'ordre du kilovolt), l'hystérésis de l'élongation piézoélectrique, et aussi le fait que le temps de réponse est élevé car la bande passante de la commande du retard est limitée par l'inertie mécanique du mandrin (au mieux quelques dizaines de kilohertz). Une telle ligne à retard présente de plus une consommation importante d'énergie en régime dynamique, cette consommation étant due aux fortes capacités des éléments piézoélectriques. En outre, un tel dispositif n'étant pas constitué par la seule longueur de fibre nécessaire mais aussi par le mandrin piézoélectrique, son poids est important.

Une autre solution connue consiste à utiliser une ligne à retard contrôlée thermiquement avec une sensibilité de typiquement 50ps/°C.km. Ainsi, une plage de retard de 25ps peut être couverte avec une fibre de 50m de longueur et un dispositif thermostatique dont la température peut être ajustée sur une plage de 10°C.

Cependant, cette solution présente une inertie considérable et pose de sérieux problèmes de stabilisation en température.

La présente invention vise à pallier les problèmes des dispositifs précités en proposant un dispositif d'application d'un retard qui soit aisé à l'utilisation, précis et qui ne présente qu'une très faible inertie.

Un but supplémentaire de l'invention vise à fournir un dispositif dont les performances ne sont que très peu dépendantes de la polarisation des signaux optiques fournis à l'entrée.

A cet effet, l'invention a pour objet un dispositif d'application d'un retard pour signaux optiques ayant la forme d'une modulation d'une onde porteuse possédant une longueur d'onde centrale, caractérisé en ce qu'il comprend :

- un premier modulateur de phase prévu pour recevoir un signal optique d'entrée porté par une longueur d'onde centrale initiale et apte à appliquer une première modulation de phase à l'onde porteuse dudit signal d'entrée de façon à fournir un premier signal intermédiaire porté par une longueur d'onde centrale modifiée,
- un élément dispersif retardateur présentant une dispersion chromatique, disposé pour recevoir ledit premier signal intermédiaire et fournir un second signal intermédiaire, et
- un second modulateur de phase disposé pour recevoir ledit second signal intermédiaire et apte à appliquer une seconde modulation de phase à l'onde porteuse dudit second signal intermédiaire pour fournir un signal de sortie porté par ladite longueur d'onde centrale initiale.

Le dispositif selon l'invention peut présenter une ou plusieurs des caractéristiques suivantes :

- il comprend en outre une unité de commande des premier et second modulateurs de phase, apte à ajuster les profondeurs des modulations de phase appliquées respectivement au signal d'entrée et au second signal intermédiaire;
- le signal d'entrée étant un signal binaire présentant un temps bit déterminé, l'unité de commande est prévue pour commander les premier et second modulateurs de phase périodiquement avec une période égale à ce temps bit;
- la profondeur maximale de modulation de phase applicable respectivement au signal d'entrée et au second signal intermédiaire et/ou la dispersion chromatique de l'élément dispersif retardateur sont choisies de manière à obtenir une plage de retard qui est au moins égale à ce temps bit;

- il comprend en outre des moyens aptes à modifier la dispersion chromatique de l'élément dispersif retardateur;
- chacun des premier et second modulateurs de phase est choisi pour appliquer aux signaux optiques des modulations de phase sensiblement indépendantes de l'état de polarisation de ces signaux.

Ainsi, l'invention exploite la propriété des milieux dispersifs, tels que les fibres dispersives ou les fibres à réseau de Bragg photo-inscrit , d'imposer à une onde optique les traversant une vitesse de propagation qui est fonction de la longueur d'onde (ou de la fréquence optique) de cette onde. Grâce au premier modulateur de phase, on peut ajuster une modification appliquée à la longueur d'onde de l'onde porteuse des impulsions constituant un signal optique d'entrée et régler ainsi le temps de propagation de ces impulsions dans le milieu dispersif retardateur. Par une modulation de phase opposée, le second modulateur de phase permet de rétablir la longueur d'onde à sa valeur initiale.

On peut noter que cette solution est bien adaptée aux signaux optiques présentant une modulation d'amplitude de type RZ car la modulation de phase à appliquer peut être mise en oeuvre très simplement à partir d'un signal d'horloge ayant la fréquence bit. Pour d'autre types de modulation tels que la modulation d'amplitude de type NRZ, on ajoute des contraintes au niveau des modulateurs de phase du fait que la variation maximale de phase à appliquer est plus importante.

Pour les signaux classiques mentionnés ci-dessus, on sait par ailleurs que les milieux dispersifs ont pour effet d'élargir les impulsions optiques. Aussi la présence d'un élément dispersif dans le dispositif selon l'invention doit être pris en compte dans certains cas où il est nécessaire que la dispersion chromatique de l'élément dispersif retardateur soit importante pour assurer une large plage de retard. Une compensation sera à prévoir en particulier si, à cause de cette dispersion chromatique, les impulsions en sortie du milieu dispersif retardateur présentent des largeurs incompatibles avec la modulation de phase exercée par le second modulateur.

On rappelle que le coefficient de dispersion chromatique D d'un milieu est lié à sa constante de propagation $\beta$ par la relation :

$$d^2\beta/d\omega^2 = -(2\pi c/\omega^2)D \ ,$$

où $\omega$ est la pulsation de l'onde optique et c la vitesse de la lumière dans le vide.

D'une façon générale, le coefficient D pourra être positif, nul ou négatif selon la longueur d'onde et le milieu utilisé. Par exemple pour les fibres standard, la dispersion chromatique vaut environ +17 ps/(km.nm) pour une longueur d'onde de 1,5 $\mu$m.

On définit pour un élément dispersif homogène ou non, par exemple une liaison comportant une fibre dispersive, une valeur de dispersion chromatique qui peut s'exprimer mathématiquement par la formule :

$$(1) \qquad DL = \int D(z).dz$$

où z est l'abscisse de points placés le long du milieu dispersif, D(z) est son paramètre de dispersion chromatique à abscisse z, l'intégrale qui exprime la dispersion DL étant calculée le long du chemin de propagation des ondes dans le milieu dispersif.

De même, lorsqu'une liaison est constituée de plusieurs éléments dispersifs couplés en cascade, on peut définir pour cette liaison une dispersion chromatique cumulée qui est la somme algébrique des dispersions chromatiques des différents éléments qui forment la liaison.

Aussi pour résoudre l'éventuel problème d'élargissement les impulsions optiques mentionné ci-dessus, le dispositif selon l'invention peut comporter en outre un second élément dispersif disposé pour fournir au premier modulateur de phase le signal d'entrée à partir d'un signal optique à retarder, ce second élément dispersif présentant une dispersion chromatique de signe opposé à celui de la dispersion chromatique présentée par l'élément dispersif retardateur, et dont la valeur absolue est inférieure à celle de l'élément dispersif retardateur.

Grâce à cette disposition, il est assuré que la valeur absolue de la dispersion chromatique cumulée évaluée à partir du signal à retarder jusqu'à chacun des modulateurs de phase reste inférieure à la valeur absolue de la dispersion chromatique de l'élément dispersif retardateur.

Bien entendu les dispositions précédentes impliquent que le signal à retarder ne présente pas d'élargissements de ses impulsions dus à un élément dispersif situé en amont, c'est-à-dire une liaison de transmission dispersive telle qu'une fibre standard.

Dans le cas contraire, le dispositif selon l'invention comporte un second élément dispersif disposé pour fournir audit premier modulateur de phase ledit signal d'entrée à partir d'un signal émis par une liaison optique, ledit second élément dispersif présentant une dispersion chromatique telle que la dispersion chromatique cumulée de ladite liaison optique et dudit second élément dispersif soit de signe opposé à celui de la dispersion chromatique présentée par ledit élément dispersif retardateur, la valeur absolue de ladite dispersion chromatique cumulée étant inférieure à celle de l'élément dispersif retardateur.

La présence du second élément dispersif n'est toutefois indispensable que si la dispersion chromatique cumulée en amont de chacun des modulateurs de phase, évaluée à partir du signal à retarder ou du signal émis est suffisante pour élargir sensiblement les impulsions. Un autre cas où on peut se passer du second élément dispersif est celui où le signal d'entrée est constitué d'un train d'impulsions de type soliton, alors que la dispersion chromatique de l'élément dispersif retardateur est positive.

L'invention a également pour objet un convertisseur de signaux optiques multiplexés en longueur d'onde en signaux optiques multiplexés temporellement comportant au moins un dispositif tel que défini ci-dessus.

D'autres avantages et caractéristiques apparaîtront à la lecture de la description suivante, donnée à titre d'exemple non limitatif et se référant aux figures sur lesquelles :

- la figure 1 est un schéma synoptique du dispositif selon l'invention;
- les figures 2 et 3 représentent des chronogrammes permettant d'expliquer le fonctionnement du dispositif selon l'invention;
- la figure 4 est un schéma synoptique montrant un convertisseur de signaux optiques WDM en signaux optiques TDM.

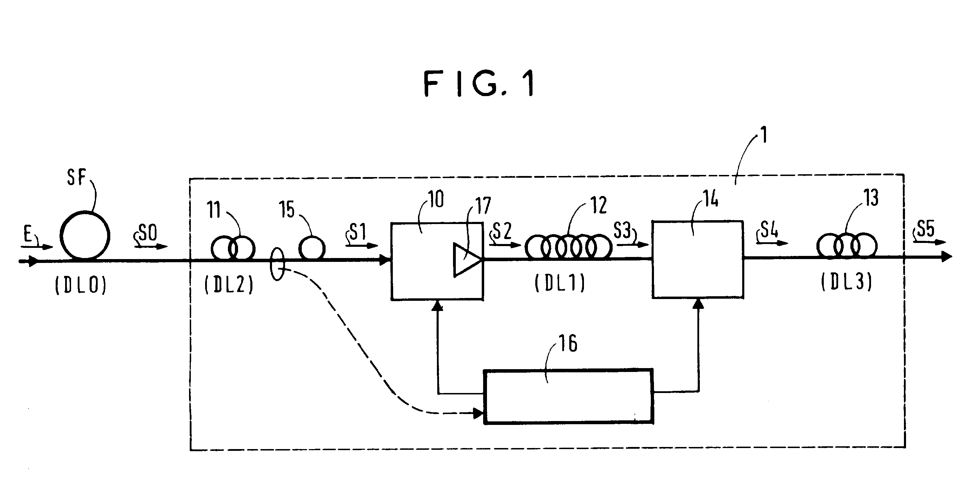

La figure 1 représente un dispositif 1 d'application d'un retard selon l'invention. A titre d'illustration, le dispositif est disposé en aval d'une ligne de transmission SF de signaux optiques émis E.

Le dispositif 1 comprend un premier modulateur de phase optique 10 recevant un signal optique d'entrée S1 porté par une longueur d'onde centrale initiale. Ce modulateur 10 est apte à appliquer une première modulation de phase à l'onde porteuse du signal S1 de façon à fournir un signal intermédiaire S2 porté par une longueur d'onde centrale modifiée.

La sortie du modulateur de phase 10 est couplée à un élément dispersif 12 constitué par exemple d'une fibre optique dispersive.

Cette fibre 12 joue le rôle de la fibre retardatrice car elle présente une dispersion DL1 ayant pour effet que le temps de propagation du signal S2 la traversant soit fonction du décalage de la longueur d'onde centrale appliqué par le premier modulateur de phase 10.

Le signal issu de la fibre 12 constitue un second signal intermédiaire S3 qui est reçu par un second modulateur de phase 14 couplé à la sortie de la fibre retardatrice 12.

Le second modulateur de phase 14 est sensiblement identique au premier modulateur 10, mais il est prévu pour réaliser une modulation de phase complémentaire de celle effectuée par le premier modulateur 10, ceci afin de recaler sur la longueur d'onde centrale initiale la longueur d'onde centrale du signal S4 fourni en sortie.

Une unité de commande 16 associée aux modulateurs de phase 10 et 14 est destinée à leur appliquer des tensions de commande appropriées. Pour synchroniser les commandes, l'unité 16 reçoit un signal représentatif de la modulation du signal S1, comme symbolisé par la flèche en pointillés.

Les éléments constitutifs du dispositif mentionnés ci-dessus sont des composants bien connus dans le domaine des transmissions optiques.

Comme modulateurs de phase, on choisira de préférence des composants conçus pour être insensibles à la polarisation, c'est-à-dire qui appliquent aux ondes optiques qui les traversent une même modulation de phase, quel que soit l'état de polarisation de ces ondes.

Par ailleurs, pour réaliser l'élément dispersif 12, plutôt qu'une fibre dispersive usuelle, il est préférable d'utiliser un composant à base de fibre munie d'un réseau de Bragg photo-inscrit à période variable (dit réseau "chirpé"). On rappelle que ces composants fonctionnent en réflexion et imposent au composantes spectrales d'une onde injectée des chemins optiques fonction de leurs longueurs d'onde. Pour une valeur de dispersion chromatique donnée, ces composants présentent l'avantage que la longueur de fibre nécessaire est beaucoup plus faible que celle d'une fibre dispersive usuelle. Il en résulte un fonctionnement bien plus stable vis-à-vis des fluctuations de température.

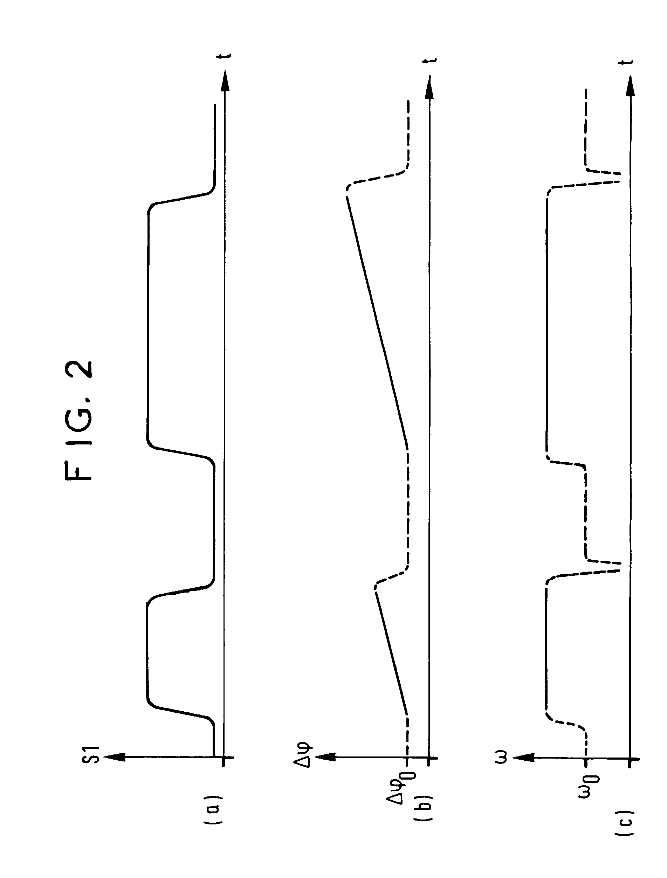

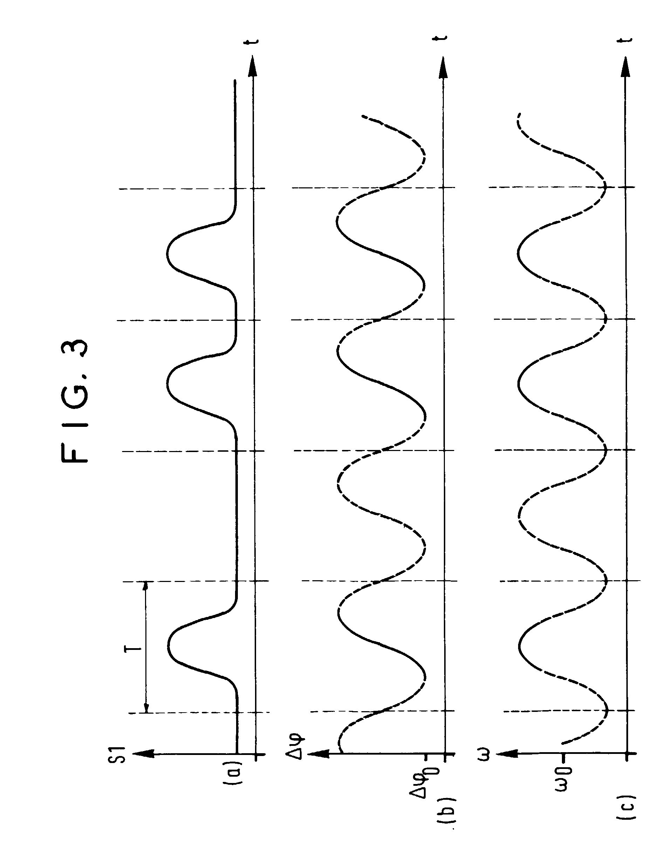

Les chronogrammes représentés sur les figures 2 et 3 vont permettre d'expliquer le principe de fonctionnement du dispositif selon l'invention.

La figure 2 correspond à un cas où le signal d'entrée S1 a la forme d'une modulation d'amplitude quelconque d'une onde porteuse dont la longueur d'onde correspond à une pulsation $\omega 0$. Le chronogramme (a) montre un exemple de variations en fonction du temps t de l'amplitude du signal S1.

En sortie du modulateur 10, le signal S2 présente une modulation d'amplitude analogue et peut s'exprimer en fonction du temps t sous la forme :

$$S2 = A(t)\cos(\omega 0.t + \Delta\varphi),$$

où $A(t)$ est l'amplitude modulée, $\omega 0$ la pulsation du signal d'entrée S1 et $\Delta\varphi$ le décalage de phase entre les signaux S2 et S1 créé par le modulateur.

Si la commande appliquée au modulateur 10 n'est pas modulée, S2 conserve la pulsation $\omega 0$ du signal d'entrée S1.

Si par contre la commande est modulée, $\Delta\varphi$ varie en fonction du temps et la pulsation de S2 devient :

$$\omega = \omega 0 + d (\Delta\varphi)/dt$$

Ainsi, en appliquant au modulateur 10 une commande telle que les variations en fonction du temps t du décalage de phase $\Delta\varphi$ présentent une pente $d(\Delta\varphi)/dt$ non nulle, la pulsation $\omega$ de l'onde porteuse de S2 est décalée par rapport à $\omega 0$ d'une valeur proportionnelle à cette pente. En particulier, si cette pente est constante, le décalage entre $\omega$ et $\omega 0$ est constant.

En pratique, comme on ne peut pas augmenter ou diminuer indéfiniment la phase, on module le décalage de phase Δφ de sorte que ce décalage présente la pente requise pendant chaque impulsion du signal d'entrée S1, un décalage opposé étant produit pendant les niveaux bas de puissance optique du signal. Une telle modulation de phase à pente sensiblement constante pendant les impulsions est représentée sur le chronogramme (b). Il en résulte la variation en fonction du temps t de la pulsation ω, représentée sur le chronogramme (c).

L'unité de commande doit créer une modulation de phase synchronisée avec la modulation d'amplitude du signal d'entrée S1, comme schématisé par la flèche en pointillés sur la figure 1. En cas de besoin, pour tenir compte du temps de traitement électronique par l'unité 16, on pourra prévoir de retarder le signal S1 d'un retard fixe approprié 15, avant de l'injecter dans le modulateur 10.

Par rapport à un signal qui n'aurait pas subi la modulation de phase, les impulsions du signal S3 issues de la fibre retardatrice 12 présentent un retard ou une avance proportionnel(le) aux valeurs absolues de la dispersion chromatique DL1 de la fibre retardatrice et du décalage entre les pulsations ω et ω0. De plus, on obtiendra un retard ou une avance selon les signes de la dispersion chromatique DL1 et du décalage entre les pulsations.

La modulation de phase effectuée par le second modulateur de phase 14 qui est simplement complémentaire de celle du premier modulateur n'a pas été représentée sur la figure.

Ainsi le retard relatif appliqué au signal d'entrée est fonction de trois paramètres qui sont :

- le coefficient de dispersion chromatique D de la fibre retardatrice,
- sa longueur, et
- la pente d (Δφ)/dt du décalage de phase Δφ en fonction du temps t.

Il est donc possible de déterminer la plage de variation du retard par le choix du type de fibre dispersive et de sa longueur, et par la pente en fonction du temps de la commande du modulateur 10.

Pour ajuster dynamiquement le retard, on peut agir dynamiquement sur la dispersion chromatique DL1, par exemple de façon connue en soi, par allongement et/ou contraction commandé(s) de la fibre au moyen d'un actionneur électromécanique. Toutefois un ajustement par la commande du modulateur peut être préférable pour des raisons de rapidité et de précision. Dans ce cas, l'unité de commande 16 doit appliquer aux modulateurs de phase 10 et 14 les tensions de commande appropriées pour ajuster les profondeurs des modulations de phase.

La figure 3 correspond à un cas où le signal d'entrée S1 (chronogramme (a)) présente un format de modulation de type RZ rythmé par une horloge de période T définissant le temps bit. Dans ce cas, la modulation de phase peut prendre la forme d'une variation périodique de période T, idéalement en forme de dents de scie, dont les fronts montants (ou descendants) sont calés à l'intérieur des impulsions du signal. Il conviendra de prévoir des moyens de retard électriques ou optiques pour synchroniser les signaux de commande des modulateurs 10 et 14 de sorte que les impulsions du signal RZ d'entrée S1 soient centrées sur les partie respectivement croissantes (ou décroissantes) et décroissantes (ou croissantes) des variations de phase exercées respectivement par les modulateurs.

En pratique, surtout à haut débit, il est plus facile d'obtenir des tensions de commande électrique qui présentent des modulations sensiblement sinusoïdales, dérivées d'un signal d'horloge ayant la fréquence bit, comme représenté sur le chronogramme (b). Si ce signal d'horloge n'est pas disponible au niveau du dispositif, il peut être créé à partir du signal d'entrée S1 au moyen d'un dispositif de récupération d'horloge prévu dans l'unité de commande 16, comme schématisé par la flèche en pointillés sur la figure 1.

Comme on peut le voir schématiquement sur le chronogramme (c), le décalage de pulsation n'est pas constant mais ses fluctuations seront d'autant moins sensibles que les impulsions du signal sont étroites.

Comme exposé précédemment, si la dispersion chromatique de la fibre retardatrice 12 doit être prise en compte pour limiter l'élargissement des impulsions du signal S3 appliqué au second modulateurs de phase 14, on prévoit un élément dispersif de précompensation 11 disposé en amont du premier modulateur de phase 10. Ce second élément dispersif 11 fournit comme signal d'entrée S1 un signal précompensé obtenu à partir du signal optique S0 à retarder.

L'élément dispersif de précompensation 11 présente une dispersion chromatique DL2 de signe opposé à celui de la dispersion chromatique DL1 présentée par l'élément dispersif retardateur 12, et dont la valeur absolue est inférieure à celle de l'élément dispersif retardateur 12.

Un compromis est atteint lorsque les modulateurs de phase reçoivent des impulsions ayant subi sensiblement le même élargissement. Pour cela, on prévoira que le second élément dispersif 11 présente une dispersion chromatique DL2 dont la valeur absolue est sensiblement égale à la moitié de celle DL1 de l'élément dispersif retardateur 12.

Bien entendu, la présence du second élément dispersif n'est indispensable que si la dispersion chromatique cumulée en amont de chacun des modulateurs de phase, évaluée à partir du signal à retarder ou du signal émis est suffisante pour élargir sensiblement les impulsions.

Par ailleurs, le problème d'élargissement dû à l'élément dispersif retardateur peut être absent ou du moins atténué si le signal d'entrée est constitué d'un train d'impulsions de type soliton ou s'en rapprochant. En effet, à condition de choisir un élément dispersif retardateur présentant une dispersion chromatique positive, il se produit dans cet élément une compensation de l'élargissement des impulsions dû à la dispersion chromatique par des effets non linéaires (effet Kerr). Il convient toutefois que l'amplitude des impulsions du signal injecté dans l'élément dispersif retardateur soient suffisamment élevée pour faire apparaître les phénomènes non linéaires. En cas de besoin, on peut prévoir un amplificateur optique 17 en amont de l'élément dispersif retardateur.

Dans un autre contexte où le signal disponible au niveau du dispositif de retard est un signal reçu après transmission dans une liaison optique dispersive SF, telle qu'une fibre standard, ce signal peut présenter des élargissements dont il faut tenir compte.

Dans ce cas le second élément dispersif 11 sera disposé entre l'extrémité de la liaison optique SF et le premier modulateur de phase 10, et sa dispersion chromatique DL2 sera choisie de sorte que la dispersion chromatique cumulée DL0 + DL2 de la liaison optique SF et du second élément dispersif 11 soit de signe opposé à celui de la dispersion chromatique DL1 présentée par l'élément dispersif retardateur 12, et tel que la valeur absolue de cette dispersion chromatique cumulée soit inférieure à celle de l'élément dispersif retardateur 12.

De façon analogue au cas précédent, pour que les modulateurs de phase reçoivent des impulsions ayant subi sensiblement le même élargissement, on prévoira que le second élément dispersif 11 présente une dispersion chromatique DL2 telle que la valeur absolue de la dispersion chromatique cumulée soit sensiblement égale à la moitié de celle DL1 de l'élément dispersif retardateur 12.

Enfin, dans le cas où le dispositif selon l'invention doit fournir un signal dont les impulsions ne sont pas élargies, comme c'est le cas pour la conversion WDM-TDM, on prévoira avantageusement un troisième élément dispersif de compensation 13 disposé pour recevoir le signal de sortie S4 et fournir un signal de sortie compensé S5.

Ce troisième élément dispersif 13 sera choisi pour présenter une la dispersion chromatique DL3 telle que la dispersion chromatique cumulée du second élément dispersif 11, de l'élément dispersif retardateur 12, du troisième élément dispersif de compensation 13 et le cas échéant de la liaison optique SF soit sensiblement nulle.

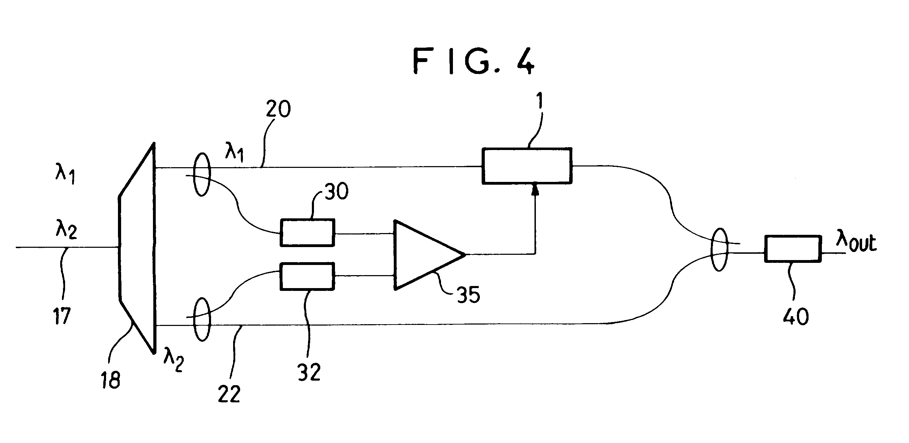

La figure 4 montre un convertisseur de signaux optiques multiplexés en longueur d'onde en signaux optiques multiplexés temporellement. Ce convertisseur comprend une liaison d'entrée 17 d'un signal multiplexé en longueur d'onde, également appelé signal WDM. Pour des raisons de clarté, il est supposé que le signal WDM est constitué de deux canaux correspondant respectivement à une première composante spectrale à la longueur d'onde λ1 et à une seconde composante spectrale à la longueur d'onde λ2, ayant chacune la forme d'une modulation au format RZ.

La liaison d'entrée 17 est couplée à une entrée d'un démultiplexeur 18 dont une sortie est couplée à une liaison optique 20 pour véhiculer la composante spectrale de longueur d'onde λ1, et dont l'autre sortie est couplée à une liaison optique 22 pour véhiculer la composante spectrale de longueur d'onde λ2.

Dans la liaison optique 20 est disposé un dispositif 1 selon l'invention afin de pouvoir appliquer à la composante spectrale y circulant λ1 un retard permettant d'entrelacer temporellement les deux composantes spectrales.

En aval du dispositif 1, les liaisons 20 et 22 sont optiquement couplées. Les composantes spectrales se retrouvant sur une même liaison optique sont introduites dans une unité 40 de conversion de la longueur d'onde. Cette unité 40 convertit aussi bien les signaux de longueur d'onde λ1 que ceux de longueur d'onde λ2 en un signal optique de longueur d'onde λout constituant le signal TDM.

Le signal de commande du dispositif 1 selon l'invention est obtenu en prélevant aussi bien sur la liaison optique 20 que sur la liaison optique 22, une faible partie des signaux optiques issus du démultiplexeur 18 et en introduisant ces signaux prélevés dans des dispositifs respectivement 30 et 32 de récupération de signal d'horloge.

Les sorties respectives des circuits 30 et 32 sont raccordées à un amplificateur différentiel 35 ou un comparateur de phase dont la sortie fournit au dispositif 1 selon l'invention un signal de consigne de manière que les impulsions optiques dans les deux liaisons 20 et 22 soient temporellement décalés, de préférence de la moitié de la durée d'un bit, les unes par rapport aux autres avant la conversion de longueur d'onde dans l'unité 40.

En variante, la récupération du signal d'horloge pourrait être obtenue à partir du signal issu du dispositif 1.

Bien entendu, si le signal WDM présente plus que deux canaux, il suffit d'adapter le démultiplexeur et de prendre comme référence une liaison optique avec son signal d'horloge, les signaux optiques dans les autres liaisons en sortie du démultiplexeur étant respectivement retardées d'un sous-multiple de la durée d'un bit par rapport au signal d'horloge de référence.

## Revendications

1.  Dispositif d'application d'un retard pour signaux optiques ayant la forme d'une modulation d'une onde porteuse possédant une longueur d'onde centrale, caractérisé en ce qu'il comprend :

    -  un premier modulateur de phase (10) prévu pour recevoir un signal optique d'entrée (S1) porté par une longueur d'onde centrale initiale et apte à appliquer une première modulation de phase à l'onde porteuse dudit signal d'entrée (S1) de façon à fournir un premier signal intermédiaire (S2) porté par une longueur d'onde centrale modifiée,

-    un élément dispersif retardateur (12) présentant une dispersion chromatique (DL1), disposé pour recevoir ledit premier signal intermédiaire (S2) et fournir un second signal intermédiaire (S3), et

-    un second modulateur de phase (14) disposé pour recevoir ledit second signal intermédiaire (S3) et apte à appliquer une seconde modulation de phase à l'onde porteuse dudit second signal intermédiaire (S3) pour fournir un signal de sortie (S4) porté par ladite longueur d'onde centrale initiale.

2.    Dispositif selon la revendication 1, caractérisé en ce qu'il comprend en outre une unité de commande (16) desdits premier (10) et second (14) modulateurs de phase, apte à ajuster les profondeurs des modulations de phase appliquées respectivement audit signal d'entrée (S1) et audit second signal intermédiaire (S3).

3.    Dispositif selon la revendication 2, caractérisé en ce que ledit signal d'entrée étant un signal binaire présentant un temps bit déterminé (T), ladite unité de commande (16) est prévue pour commander lesdits premier (10) et second (14) modulateurs de phase périodiquement avec une période égale audit temps bit (T).

4.    Dispositif selon la revendication 3, caractérisé en ce que la profondeur maximale de modulation de phase applicable respectivement audit signal d'entrée (S1) et audit second signal intermédiaire (S3) et/ou la dispersion chromatique dudit élément dispersif retardateur (12) sont choisies de manière à obtenir une plage de retard qui est au moins égale audit temps bit (T).

5.    Dispositif selon la revendication 1, caractérisé en ce qu'il comprend en outre des moyens aptes à modifier la dispersion chromatique (DL1) dudit élément dispersif retardateur (12).

6.    Dispositif selon l'une quelconque des revendications 1 à 5, caractérisé en ce que chacun desdits premier (10) et second (14) modulateurs de phase est choisi pour appliquer aux signaux optiques des modulations de phase sensiblement indépendantes de l'état de polarisation de ces signaux.

7.    Dispositif selon l'une quelconque des revendications 1 à 6, caractérisé en ce qu'il comporte un second élément dispersif (11) disposé pour fournir audit premier modulateur de phase (10) ledit signal d'entrée (S1) à partir d'un signal optique (S0) à retarder, ledit second élément dispersif (11) présentant une dispersion chromatique (DL2) de signe opposé à celui de la dispersion chromatique (DL1) présentée par ledit élément dispersif retardateur (12), et dont la valeur absolue est inférieure à celle dudit élément dispersif retardateur (12).

8.    Dispositif selon la revendication 7, caractérisé en ce que ledit second élément dispersif (11) présente une dispersion chromatique (DL2) dont la valeur absolue est sensiblement égale à la moitié de celle (DL1) dudit élément dispersif retardateur (12).

9.    Dispositif selon l'une quelconque des revendications 1 à 6, caractérisé en ce qu'il comporte un second élément dispersif (11) disposé pour fournir audit premier modulateur de phase (10) ledit signal d'entrée (S1) à partir d'un signal émis (E) par une liaison optique (SF), ledit second élément dispersif (11) présentant une dispersion chromatique (DL2) telle que la dispersions chromatique cumulée (DL0, DL2) de ladite liaison optique (L) et dudit second élément dispersif (11) soit de signe opposé à celui de la dispersion chromatique (DL1) présentée par ledit élément dispersif retardateur (12), la valeur absolue de ladite dispersion chromatique cumulée étant inférieure à celle dudit élément dispersif retardateur (12).

10.    Dispositif selon la revendication 9, caractérisé en ce que la valeur absolue de ladite dispersion chromatique cumulée est sensiblement égale à la moitié de celle dudit élément dispersif retardateur (12).

11.    Dispositif selon l'une quelconque des revendications 7 à 10, caractérisé en ce qu'il comporte un troisième élément dispersif de compensation (13) disposé pour recevoir ledit signal de sortie (S4) et fournir un signal de sortie compensé (S5).

12.    Convertisseur de signaux optiques multiplexés en longueur d'onde en signaux optiques multiplexés temporellement, comportant au moins un dispositif (1) d'application d'un retard à un desdits signaux optiques multiplexés en longueur d'onde, caractérisé en ce que ledit dispositif (1) est conforme à l'une quelconque des revendications 1 à 11.

# FIG. 1

F I G. 2

# F I G. 3

EP 1 111 820 A1

FIG. 4

**Office européen des brevets**

## RAPPORT DE RECHERCHE EUROPEENNE

Numéro de la demande

EP 00 40 3624

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | JEPSEN KS ET AL: "ALL-OPTICAL NETWORK INTERFACE FOR BIT SYNCHRONIZATION AND REGENERATION" ECOC, 22 - 25 septembre 1997, pages 89-92, XP002141775 * page 89 * * figure 1 * --- | 1-5 | H04J14/02 H04B10/02 H04B10/18 H04J14/02 G02B6/28 |
| A | PATENT ABSTRACTS OF JAPAN vol. 010, no. 217 (E-423), 29 juillet 1986 (1986-07-29) & JP 61 053893 A (NIPPON TELEGR & TELEPH CORP), 17 mars 1986 (1986-03-17) * abrégé * * figure 1 * --- | 1-5 | |
| A | US 5 526 170 A (ESMAN RONALD D ET AL) 11 juin 1996 (1996-06-11) * abrégé * * figures 1,5 * --- | 1-5 | |
| A | US 5 737 106 A (SANSONETTI PIERRE ET AL) 7 avril 1998 (1998-04-07) * abrégé * * colonne 6, ligne 56 - ligne 62 * * figures 1,3 * ----- | 1,5 | **DOMAINES TECHNIQUES RECHERCHES (Int.Cl.7)** H04B H04J G02B |

Le présent rapport a été établi pour toutes les revendications

| Lieu de la recherche | Date d'achèvement de la recherche | Examinateur |
|---|---|---|
| LA HAYE | 2 mai 2001 | Ribbe, A |

**ANNEXE AU RAPPORT DE RECHERCHE EUROPEENNE
RELATIF A LA DEMANDE DE BREVET EUROPEEN NO.**

EP 00 40 3624

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-05-2001

| Document brevet cité au rapport de recherche | Date de publication | Membre(s) de la famille de brevet(s) | | Date de publication |
|---|---|---|---|---|
| JP 61053893 A | 17-03-1986 | JP | 1872842 C | 26-09-1994 |
|  |  | JP | 5086713 B | 14-12-1993 |
| US 5526170 A | 11-06-1996 | AUCUN | | |
| US 5737106 A | 07-04-1998 | FR | 2725528 A | 12-04-1996 |
|  |  | CA | 2160216 A | 12-04-1996 |
|  |  | EP | 0707223 A | 17-04-1996 |
|  |  | JP | 8122559 A | 17-05-1996 |

EPO FORM P0460

Pour tout renseignement concernant cette annexe : voir Journal Officiel de l'Office européen des brevets, No.12/82